Europäisches Patentamt

European Patent Office

Office européen des brevets

(19)

(11) Publication number: **0 070 593**
**B1**

# (12) EUROPEAN PATENT SPECIFICATION

(45) Date of publication of patent specification: **03.12.86**

(51) Int. Cl.⁴: **A 01 G 11/00, B 09 B 5/00**

(21) Application number: **82200863.7**

(22) Date of filing: **09.07.82**

(54) **Process for the purification of soil by the introduction of a heating medium as well as vacuum bell and apparatus therefor.**

(30) Priority: **10.07.81 NL 8103307**

(43) Date of publication of application:
**26.01.83 Bulletin 83/04**

(45) Publication of the grant of the patent:
**03.12.86 Bulletin 86/49**

(84) Designated Contracting States:
**BE DE FR GB IT NL**

(56) References cited:
**CH-A- 250 018**
**FR-A-1 574 916**
**FR-A-2 383 601**

(73) Proprietor: **Blonk, Dirk Jan**
**Esdoornlaan 14**
**NL-3442 HC Woerden (NL)**

(72) Inventor: **Blonk, Dirk Jan**
**Esdoornlaan 14**
**NL-3442 HC Woerden (NL)**

(74) Representative: **Rhijnsburger, Johan Gerard**
**'s-Gravenbroekseweg 32**
**NL-2811 GE Reeuwijk (NL)**

Courier Press, Leamington Spa, England.

## Description

The invention relates to a process for the purification of soil, by the introduction of a heating medium, an apparatus for carrying out this process and a vacuum clock for use in this process. The invention especially relates to the removal of chemicals from polluted soil. In particular industrial areas and dumping places problems have arisen by the removal and building up of harmful impurities, especially of a chemical nature, in the soil. This leads to dangers for the environment, such as the affection of the ground water, the said areas becoming also unsuitable for building purposes. Up to now it has not been possible to restore such areas in an economically acceptable way other than through excavation and replacement of the polluted soil; covering is possible but this does in fact not solve the problem of removal of the impurities.

FR—A—1574916 discloses the simultaneous loosening and purification of agricultural and horicultural soil by introducing steam or hot air using a ground treating, driven or drawn, device with ploughing action, in which method a slight underpressure is used in order to recover part of the medium leaving the soil. Such method not being carried out stationary it is not possible to remove impurities with relatively high atmospheric boiling point from polluted soil while also the penetration depth is restricted to the surface layers.

The invention has the object to provide a process as well as related apparatus by which impurities, in particular chemical compounds with relative high atmospheric boiling points can be effectively removed without causing further damage to the environment, which process is more economical than excavating and safer than covering. It is a further object of the invention to provide a process and related apparatus for carrying out the process wherein also impurities lying more deeply in the ground can be effectively removed.

The objects of the invention are reached by generating a vacuum above the place where the hot medium is injected in the soil and withdrawing the impurities volatilized by the medium in the vacuum zone followed by and removing them without contact with the environment.

This process has the advantage that various impurities included deeper lying impurities, can be removed, these impurities are not carried off in the environment and explosion dangers are minimized owing to the minal presence of oxygen. This process is not dangerous for the operators in view of the limited explosion danger and the application of vacuum so that no poisonous vapors can escape; further the installation to be used may be made mobile.

Thus the process of the invention is characterized in that the medium is driven into the soil by one or more injection lances and above the place of penetration of the lances through the surface of the ground or in the direct neighbourhood thereof a vacuum zone is established which during the process is maintained, wherein the injection lances whilst releasing the medium are relatively slowly driven into the ground and subsequently slowly withdrawn from the soil whilst continuously releasing of the medium, the location of the vacuum zone and of the places of penetration remaining stationary at least as long as the lances are introduced into the ground, the impurities volatilized by the medium thus being drawn into this zone and removed without substantially burdening the environment.

Suitably the vacuum is locally generated by a vacuum bell connected to a vacuum line, which bell is open at the bottom, i.e. in direct contact with the soil to be treated. The hot medium as used in the invention is a medium which when injected in the soil is capable of rendering the soil porous and releasing heat. Materials to be considered are those which at superatmospheric pressures are in a gaseous state and contain enough heat content to impart a desirable temperature increase to the surrounding soil when injected into it, with or without the occurrence of condensation to increase the heat supply to the surrounding soil. Examples of such materials are hot gases, such as hot air, materials with atmospheric boiling points below 100°C, such as alcohols, petroleum derivatives—and fractions etc, which materials should not in itself be pollutants of the environment. As a hot medium preferably steam, in particular superheated steam is used, with which material especially with a view to the last condition favourable results have been obtained. In the description which follows mainly this preferred embodiment of the invention will be illustrated, but in principle the same conditions will apply to the other media.

The medium is put in the soil by means of injection lances, of which the length dependent on the situation is adjusted. It is an advantage of the invention that the depth of penetration of the lances can be adjusted to various values and that one can also reach relatively high depths, which may range to about 20 meters and more. The diameter of the lances depends of the depth which will be used and it may vary from 50 to 100 mm, values deviating therefrom being possible. The lances are suitably provided with pointed ends to facilitate inserting in the soil; preferably they are vertically inserted in the soil. In case of locations which are difficult to reach or for other reasons the lances may also be inserted in the soil under a particular inclination.

When using steam this is generally introduced in the form of superheated steam at temperatures from 130°C and at pressures available therefore. These parameters will be determined dependent on the particular situation, for example by collecting samples. In principle temperatures up to 600°C and pressures to very high values, as available for steam, are possible but for economic reasons no higher temperatures and pressures will be chosen than those which are necessary for the removal of the impurities present and the constitution of the soil.

The lances are suitable moved into and out of the soil at an adjusted rate by means of lifting installations which are known per se, possibly using vibrating hammers. In an advantageous embodiment the lances while releasing steam are relatively slowly driven into the soil and thereafter again slowly lifted, still releasing steam. In the lowering stage the soil will predominantly be heated and made porous, so that in the lifting stage the removal of the impurities will be promoted and dependent on the constitution of the soil will be carried out optimally. This treatment may be repeated various times, if desired, under difficult circumstances.

If desired additional compounds may be carried with the steam which by interaction with the impurities to be removed promote their removal. This may be a catalytically acting, process accelerating material, which degrades the impurities and gives rise to components with decreased boiling points or in another way, for example in a physical way converts the impurities into a state that they, in combination with the process promotors or not, become removable at the prevailing pressures and temperatures.

The number of injection lances which may be used varies according to the situation. Of advantage are 4 lances per m² surface area, which value however is only meant as an indication. The steam is injected into the soil by means of nozzles in such a way that the least possible pressure drop occurs. Preferably the steam is blown in obliquely upwards through lateral nozzles which favours insertion of the lance into the soil by means of the propelling force of the steam. The nozzles are preferably located only at the bottom of the lance. It is also possible to arrange various nozzles at different heights along the lance. The velocity with which the lances are driven into the soil may further, if desired, be chosen different for the introduction stage than for the removal stage, it also being possible to leave the lance for a short period in its lowest position. The moving velocity of the lance is suitably of the order of decimeters per minute, which value however is only indicative.

It is possible to effect pretreatments to promote the effect of the steam. One is to use draining in order to eliminate influence of the ground water on the process. In the apparatus according to the invention preferably a provision therefore is included.

The required vacuum is established by means of a local vacuum bell which defines the area to be treated. It differs from the steam bell as described in CH—A—250018 by the provision of the steam lances and the vacuum connection and from the well known vacuum bells by the provision of means to maintain vacuum in close contact with the soil which is treated by the steam injection process.

The invention thus also comprises a vacuum bell particularly suited for the process of the invention comprising a vacuum connection as well as sampling openings, sight glass openings and optionally a drain connection characterized in that it further comprises one or more conduits for movably receiving injection lances in sealed relationship, a supporting plate resting on the soil to be purified as well as a circumferential edge designed to be able to penetrate into the soil. This bell which may have an arbitrary shape provided the relative area is covered, preferably comprises one or more buffer spaces which are in communication with one or more vacuum pumps and which bell further is provided with upright circumferential walls. The vacuum bell in fact is open at the bottom side or provided with openings to be in contact with the soil to be treated. Thus the buffer spaces are in direct communication with the soil to be treated, the communication or communications at the lateral edge being screened off by the circumferential edge. The prolonged circumferential edge which can be inserted in the soil is preferably provided with pointed edges. Through the connection of the vacuum bell with the soil spent steam originating from the injected steam is drawn off from the soil together with impurities and heat is carried away through the space defined by the bell forming the buffer, while also as a consequence of the vacuum a decrease of the boiling point of the materials to be eliminated occurs, in any way in the neighbourhood of the vacuum bell, so that also materials less volatile at normal pressures and temperatures are removable according to this process.

The vacuum bell is in communication with one or more vacuum pumps via vacuum lines, through which lines the impurities are carried off without affecting the environment. As already mentioned possible lateral leakage into the vacuum bell is prevented by the prolonged circumferential edge. Preceding the vacuum pumps preferably one or more condensors are arranged as well as one or more heat exchangers as also materials with a higher boiling point than the ground water may be supplied. These materials are separately isolated in the condensors and carried off. Materials with lower boiling points may if desired be isolated as well by means of the condensors. Aggressive materials, like acids such as hydrochloric acid may be separated by e.g. placing an oily mist in one of the condensors, wherein this material is absorbed.

The process according to the invention can also be used for the treatment of soil that has to be excavated or that has already been excavated. In the last embodiment it is advantageous to transport the soil through a vacuum chamber by means of for instance a vacuum vibration apparatus while the vacuum space is being heated and the hot medium injected through one or more lances. The installation may also be used on a smaller scale for instance near manufacturing plants that produce poisonous effluents, so that the pollution can be attacked at the base. The cooling water system is suitable kept apart from the poisonous medium so that the cooling water can be drained without danger. The heated cooling water may be used for heating the heat exchangers to save energy. By applying isolation the nuisance of noise when working in a built area can be minimized.

The invention also comprises an apparatus for carrying out the above mentioned process comprising an installation for generating a heated medium, especially steam, as well as distributing means for said medium which is characterized in that it further comprises injection lances connected to a supply pipe, a lifting and lowering mechanism and a vibration head for the lances, as well as one or more vacuum bells in communication with a vacuum pump through a vacuum distributor provided with condensors and heat-exchangers to collect and remove impurities.

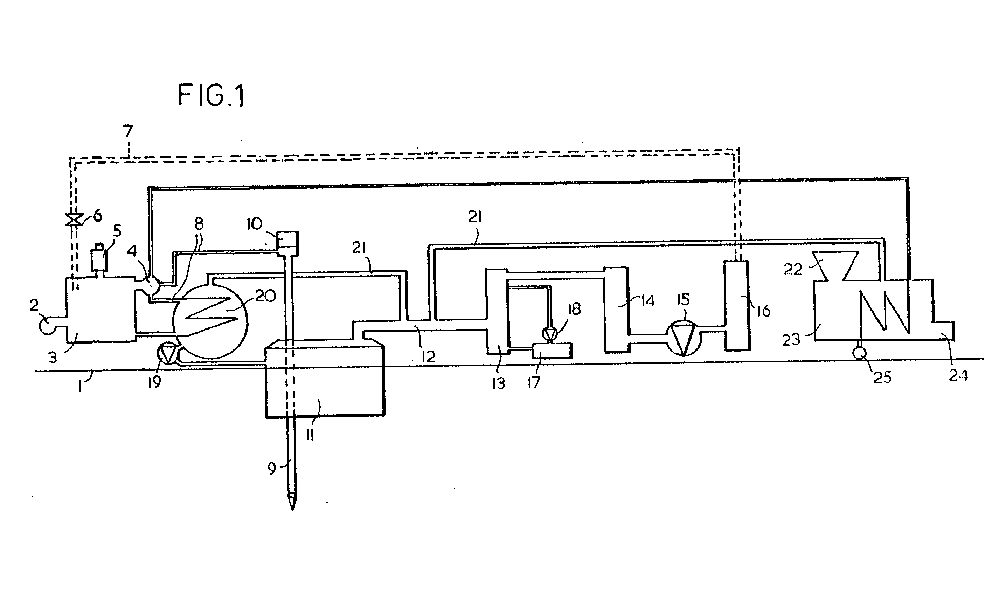

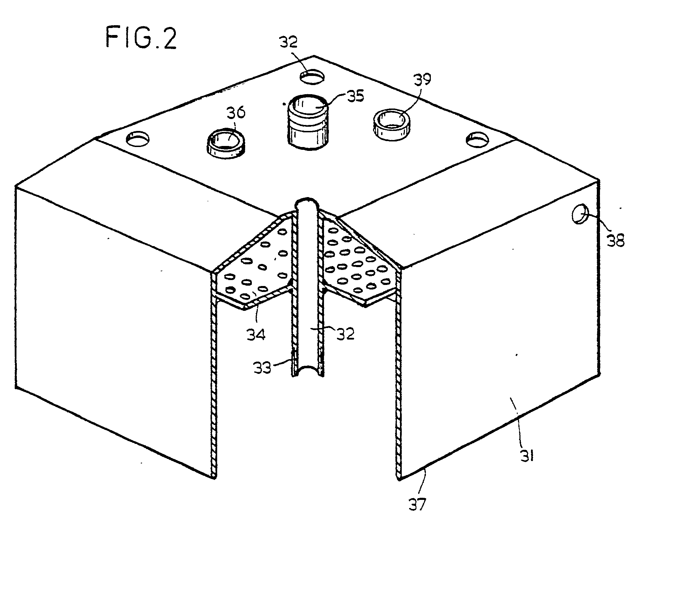

The invention will now be illustrated by means of the drawing, wherein figure 1 shows a flowsheet of the complete apparatus and figure 2 is a perspective view of a vacuum bell particularly suited for the process according to the invention. In figure 1 the generation of the medium, in this case steam, is shown at the left hand side, in the middle the part for the soil purification and at the right hand side the vacuum lines including pump and removal of the impurities. At the surface (1) of the soil to be treated a steam kettle (3) with steam kettle exhaust (5) is placed provided with a burner (2). The steam is distributed over three lines (8) by means of a steam distributor (4), of which central line (8) supplies the steam to an injection lance (9), which is pointed at the bottom part. The injection lance is driven into the soil through the vibration head (10) and a lifting mechanism (not shown) and drawn out again. The lances (of which for convenience sake only one has been drawn) penetrate into the soil through a sealed off conduit via the vacuum bell (11), of which the circumferential edge, provided with a sharp edge, penetrates into the soil.

The vacuum bell is connected to the vacuum pump (15) through the vacuum distributor (12). In the vacuum distributor (12) a condensor (13) is placed to precipitate relatively low-boiling impurities from the vapor stream collected from the soil as well as a heat exchanger (14). To the condensor (13) is connected a buffer vessel (17) e.g. for solvents, provided with a circulation pump (18) and circulation line, with which any aggressive materials can be washed out. Behind the vacuum pump (15) is placed a second condensor (16) for collecting the impurities, the dotted line (7) indicating that volatile combustible impurities if desired may be returned to the kettle. In this line at (6) a flame extinguisher is indicated. The steam line (8c) supplies steam to the heat exchanger of the nebulizer tank (20) which on one hand is connected with the vacuum line (12) via line (21a) and on the other hand connected with the high pressure circulation pump (19), which communicates with the vacuum pump. This arrangement is intended for draining preceding the steam treatment.

Treatment of ground already excavated is further possible by transporting the steam via lines (8a) to the heat exchanger of for example the vacuum vibration machine (23), where the excavated earth is supplied through a funnel (22) provided with a vacuum lock. A discharge funnel with vacuum lock is indicated by (24) and a steam condensor by (25). At the connections of the lines naturally valves are present by means of which one can switch from one line to the other; for clearness' sake these have not been shown.

In figure 2 the vacuum bell (31) is provided with a number of self sealing injection lance conduits (32). The lower side of the lance (32) drawn is provided with a screw thread (33), by means of which this conductor may if desired be extended. The bell has a vacuum connection (35) with which the vacuum line to the vacuum pump is connected. The part of bell (34) resting on the ground serves as a supporting plate and preferably is perforated, via which perforations the impurities removed from the soil may be drawn off. At its circumference the clock is provided with a sharp protruding edge (37), which can penetrate into the bottom for lateral sealing and stability. Further there are still present an opening (36) for sampling purposes, a sight glass opening (39) and a drain connection (38) for the ground water drawn off in case of draining. It is to be understood that various vacuum lines and lance connections may be present.

In principle all chemical impurities which may be volatilized at the medium temperatures and pressures utilizable can be removed from the soil with the medium by the action of the vacuum. Further it is also possible to remove the materials which by introducing catalytically active materials or process promotors, preferably introduced together with the medium, may be decomposed to materials with decreased boiling points such that they can be removed according to the process of the invention. Also other promotors decreasing the boiling point in another way, for example azeotropically can be used.

The invention is based on the fact that the steam (or another medium) penetrating into the ground on one hand by heating through steam condensation and heat conduction will vaporize the chemical materials absorbed and adsorbed in the ground and on the other hand through expansion increases the porosity of the ground. Thus the effect of the process of the invention is based both on heating of the ground at the site and increasing the porosity owing to which the impurities can be removed from the ground under the influence of the vacuum.

Such impurities are in principle all chemical contaminants and waste materials arising during many chemical and physical manufacturing or operating processes, such as for instance solvents, biting means, finishing agents, colorants and dyes, plasticizers, herbicides, insecticides etc. while naturally also removed materials, of which later on is found that they possess poisonous properties and are difficulty degradable are comprised.

Examples are aromatics and substituted aromatics, e.g. toluene, benzene, xylenes, linear, branched and cyclic hydrocarbons, e.g. cyclohexane, especially halogenated hydrocarbons, such as tribromoethane, tribromoethene and the halogens themselves, such as bromine, as well as such aggressive chemicals as acids and bases.

In carrying out the process ground samples are taken to determine the concentrations of impurities, type of impurities and the relative proportions thereof. On this basis temperature-boiling point curves of such materials are determinative for the optimal steam properties, if desired also an empirical approach being possible.

In the following tables some values are given of the relation of the boiling points and pressures of certain compounds, while in comparison also water is included.

In the tables the value of 16°C has been introduced because this represents the average bottom temperature. Of the compounds shown tribromoethane is most difficult to remove, followed by toluene, which is comparable with water, while acetone and bromine are more easy to remove.

Boiling points at various pressures

| Toluene | | Benzene | |
|---|---|---|---|
| P | T | P | T |
| 760 Torr. | 111°C | 760 | 81 |
| 200 | 70 | 200 | 43 |
| 100 | 54 | 100 | 25 |
| 50 | 46 | 65 | 16 |
| 20 | 16 | | |

| Tribromoethane | | Water | |
|---|---|---|---|
| 760 | 150 | 760 | 100 |
| 200 | 108 | 200 | 67 |
| 100 | 88 | 100 | 53 |
| 50 | 67 | 50 | 37 |
| 10 | 45 | 12 | 16 |

| Acetone | | Bromine | |
|---|---|---|---|
| 760 | 56 | 760 | 59 |
| 200 | 22 | 200 | 25 |
| 165 | 16 | 150 | 16 |

Some materials, like bromine, may become solid at lower pressures, which means that in case these materials are found in the soil, one is restricted to particular temperature limits. For materials which are hard to remove a multistage treatment may be carried out, wherein one takes advantage of the fact that the treated bottom is already made porous. In fact the stage wherein the injection lance is moved downwards constitutes the introduction stage and the stage wherein the lance is moved upwards the active removal stage. As follows from the above the applied vacuum may be adjusted to various values, dependent on the situation.

For a large variety of materials it will suffice to use values to 100 millibars. For tenacious materials one may however use values as low as 50 millibars and even lower, the lower limit being in practice determined by economical considerations.

Example

An experimental installation of the type as described in the figures was used for the purification of a ground area contaminated with cyclohexane and tribromoethane. It was found from ground samples that these materials were present to a depth of about 4 metres. Steam was generated by means of a steam kettle at a temperature of 130°C and a pressure of 2 bars. Three experiments were carried out wherein the steam was introduced into the ground by 2 injection lances to a depth of resp. about 2.8, 3.7 and 4 metres. Use was made of an annular closed vacuum bell with a buffer content of 8 l, which was connected to a vacuum pump through a line having a diameter of 20 mm. In the upper part 2 sealed off conduits for the steam lances were present, penetrating into the soil to about 10 cms. The height of the clock was 75 cms, the circumferential edge in operation penetrated into the ground for 45 cms. A vacuum was drawn of 70 millibars. The steam supply was started by slowly advancing the lances into the soil by means of the lifting and lowering installation and the vibration hammers. The duration of each experiment was adjusted to 20 minutes, the lances being advanced to the desired depth and subsequently drawn out. During the experiment at a smaller depth the lances were maintained for some time in the lowest position to equalize the duration of the experiments. Each lance was provided at the bottom with a nozzle in the shape of a conical insert, which at the circumference was provided with small holes. These were shaped in such a way that the steam was directed slantingly upwards. After introduction of the lances into the ground a vapor stream started to flow from the delimited area below the buffer space of the bell, which stream was removed and collected in the condensors.

After the experiment samples of the treated grounds were drawn, for every depth 3 kgs. It was found that the main contaminants, tribromoethane and cyclohexane had disappeared.

**Claims**

1. Process for the purification of soil by the introduction of a heating medium, characterized in that the medium is driven into the soil by one or more injection lances and above the place of penetration of the lances through the surface of the ground or in the direct neighbourhood thereof a vacuum zone is established which during the process is maintained, wherein the injection lances whilst releasing the medium are relatively slowly driven into the ground and subsequently slowly withdrawn from the soil whilst continuously releasing of the medium, the location of the vacuum zone and of the places of penetration remaining stationary at least as long as the lances are introduced into the ground, the impurities volatilized by the medium thus being drawn into this zone and removed without substantially burdening the environment.

2. Process according to claim 1, wherein the treatment is repeated one or more times.

3. Process according to claims 1—2, wherein the injection lances are passed through the vacuum zone without disturbing the vacuum.

4. Process according to claims 1—3, wherein substances are added to the medium which by interaction with the impurities to be removed promote their removal.

5. Process according to claims 1—4, wherein as a pretreatment draining is carried out.

6. Process according to claims 1—5, wherein soil is treated which has to be excavated or has already been excavated.

7. Process according to claims 1—6, wherein steam, especially superheated steam, is used.

8. Vacuum bell particularly suited for the process, according to one or more of claims 1—7, comprising a vacuum connection (35) as well as sampling openings (36), sight glass openings (39) and optionally a drain connection (38) characterized in that it further comprises one or more conduits (32) for movably receiving injection lances (9) in sealed relationship, a supporting plate (34) resting on the soil to be purified as well as a circumferential edge (37) designed to be able to penetrate into the soil.

9. Apparatus for carrying out the process according to one or more of claims 1—7, comprising an installation for generating a heated medium, especially steam, as well as distributing means (4, 8) for said medium, characterized in that it further comprises injection lances (9) connected to supply pipes (8), a lifting and lowering mechanism and a vibration head (10) for the lances (9), as well as one or more vacuum bells (11) in communication with a vacuum pump (15) through a vacuum distributor (12) provided with condensors (13) and heat-exchangers (14) to collect and remove impurities.

**Patentansprüche**

1. Verfahren zun Reinigen von Grund durch Einführung eines Erheizungsmediums, dadurch gekennzeichnet dass das Medium mittels einer oder mehreren Injizierungslanzen in den Grund hineingetrieben wird und über die Penetrierungsstelle der Lanzen durch die Oberfläche des Grundes hindurch oder in der unmittelbare Nähe davon eine Vakuumzone aufgerichtet wird, welche während des Verfahrens aufrecht erhalten wird, wobei die Injizierungslanzen unter relativ allmähliche Freigebung des Mediums verhaltnismässig langsam in den Grund hineingetrieben werden und danach allmählich unter kontinuierliche Freigebung des Mediums aus den Grund hinausgezogen werden, wobei die Stellen der Vakuumzone und die Penetrierungsstellen wenigstens so lange dass die Lanzen in den Grund hineingetrieben werden stationär bleiben, welche von medium verflüchtigte Verunreinigungen auf diese Weise in diese Zone hineingezogen werden und ohne wesentliche Belastung der Umgebund entfernt werden.

2. Verfahren gemäss Anspruch 1, dadurch gekennzeichnet dass die Behandlung eins oder mehrere Male wiederholt wird.

3. Verfahren gemäss Ansprüche 1—2, dadurch gekennzeichnet dass die Injizierungslanzen ohne das Vakuum zu hindern durch die Vakuumzone hindurch geleitet werden.

4. Verfahren gemäss Ansprüche 1—3, dadurch gekennzeichnet dass Wirkstoffe, welche durch Interaktion mit den zu entfernenden Verunreinigungen Ihre Entfernung fördern dem Medium zugesetzt werden.

5. Verfahren gemäss Ansprüche 1—4, dadurch gekennzeichnet dass als Vorbehandlung eine Dränierung ausgeführt wird.

6. Verfahren gemäss Ansprüche 1—5, dadurch gekennzeichnet das Grund der ausgegraben werden muss oder schon ausgegraben ist behandelt wird.

7. Verfahren gemäss Ansprüche 1—6, dadurch gekennzeichnet dass Dampf, insbesondere überhitzter Dampf verwendet wird.

8. Vakuumglocke insbesondere geeignet für das Verfahren, gemäss einem oder mehreren der Ansprüche 1—7, bestehend aus einer Vakuumverbindung (35), sowie Bemusterungsöffnung (36), Schauglasöffnungen (39) und gegebenenfalls eine Dränageverbindung (38) dadurch gekennzeichnet dass sie weiter eine oder mehrere Leitungen (32) für des bewegbar Aufnehmen von Injizierungslanzen (9) in abgedichteter Zusammenhang, eine Trägerplatte (34) welche auf den zu reinigende Grund stützt sowie einen Umfangsrand (37) eingerichtet um in den Grund ein zu dringen umfasst.

9. Einrichtung zum Ausführen des Verfahrens gemäss einem oder mehreren Ansprüchen 1—7, welche eine Installation zum Erzeugen eines Heizmediums, insbesondere Dampf, sowie Verteilmittel (4, 8) für das Medium umfasst, dadurch gekennzeichnet dass sie weiter Injizierungslanzen (9) verbunden mit Zufuhrleitungen (8), ein Aufhebe- und Senkmechanismus und einen Vibrationskopf (10) für die Lanzen (9), sowie eine oder mehreren Vakuumglocken (11), welche durch einen Vakuumverteiler versehen mit Kondensoren (13) und Wärmeaustauscher (14) zum Sammeln und Entfernen von Verunreinigungen in Verbindung stehen mit einer Vakuumpumpe (15), umfasst.

## Revendications

1. Procédé pour la purification du sol par l'introduction d'un agent chauffant, caractérisé en ce que l'agent est introduit dans le sol par une ou plusieurs lances d'injection et que, au-dessus de l'endroit de pénétration des lances à travers la surface du sol ou au voisinage immédiat de celui-ci est créée une zone sous vide, qui est maintenue pendant l'opération, tandis que les lances d'injection dégageant l'agent sont enfoncées relativement lentement dans le sol et retirées ensuite lentement du sol, tout en continuant à dégager l'agent, l'emplacement de la zone du vide et/ou les emplacements de pénétration restant fixes au moins aussi longtemps que les lances sont introduites dans le sol, les impuretés volatilisées par l'agent étant alors extraites de cette zone et évacuées sans gêne sensible pour l'environnement.

2. Procédé selon la revendication 1, caractérisé en ce que le traitement est répété une ou plusieurs fois.

3. Procédé selon les revendications 1 et 2, caractérisé en ce que les lances d'injection sont introduites à travers la zone sous vide, sand nuire au vide existant.

4. Procédé selon les revendications 1 à 3, caractérisé en ce qu'on ajoute à l'agent des substances qui, par leur interaction avec les impuretés à éliminer, favorisent leur élimination.

5. Procédé selon les revendications 1 à 4, caractérisé en ce qu'un drainage de prétraitement est effectué.

6. Procédé selon les revendications 1 à 5, caractérisé en ce que l'on traite de la terre qui doit être extraite ou qui a déjà été extraite.

7. Procédé selon les revendications 1 à 6, caractérisé en ce que l'on utilise de la vapeur et, plus spécialement, de la vapeur surchauffée.

8. Cloche à vide convenant particulièrement bien pour le procédé, suivant une ou plusieurs des revendications 1 à 7, comprenant une connexion à vide (35) ainsi que des orifices d'échantillonnage (36), des orifices de voyants (39) et, en option, une connexion de drainage (38), caractérisée en ce qu'elle comprend également un ou plusieurs conduits (32) destinés à recevoir de manière étanche des lances d'injection (9) amovibles, une plaque de support (34) reposant sur le sol à purifier, de même qu'un bord périphérique (37) conçu pour pouvoir pénétrer dans le sol.

9. Appareil pour mettre en oeuvre le procédé suivant une ou plusieurs des revendications 1 à 7, comprenant une installation pour produire un fluide chauffé et, plus particulièrement, de la vapeur, ainsi qu'un dispositif de distribution (4, 8) pour ledit agent, caractérisé en ce qu'il comprend, en outre, des lances d'injection (9) connectées à des tuyauteries d'alimentation (8), un mécanisme de levage et de descente et une tête vibrante (10) pour les lances (9), ainsi qu'une ou plusieurs cloche(s) à vide (11) en communication avec une pompe à vide (15) par un distributeur de vide (12) pourvu de condenseurs (13) et d'échangeurs de chaleur (14) pour collecter et évacuer les impuretés.

FIG.1

## FIG.2